(19) **Europäisches Patentamt / European Patent Office / Office européen des brevets**

(11) **EP 4 336 394 A1**

(12) # EUROPEAN PATENT APPLICATION

(43) Date of publication:
**13.03.2024 Bulletin 2024/11**

(21) Application number: **22195071.0**

(22) Date of filing: **12.09.2022**

(51) International Patent Classification (IPC):
**G06F 21/55** $^{(2013.01)}$     **G06F 21/88** $^{(2013.01)}$

(52) Cooperative Patent Classification (CPC):
**G06F 21/552; G06F 21/88**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **British Telecommunications public
limited company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **REPORTING USER DEVICE SENSOR DATA**

(57) A user device determines a likelihood that a current user of the user device is an authorised user. It then selects a subset of a plurality of types of sensor data obtained by the user device, the subset's size being determined in dependence on the determined likelihood. The user device then transmits one or more reports, each report comprising one or more of the selected one or more types of sensor data.

**FIG. 1**

EP 4 336 394 A1

**Description**

**FIELD**

The present disclosure relates to reporting user device sensor data, for example to aid location of lost or stolen user devices and apprehension of thieves.

More specifically, aspects relate to data processing devices, computer-implemented methods performed by such data processing devices, computer programs comprising instructions which, when executed, cause the executing device to carry out such methods, computer-readable data carriers having such computer programs stored thereon and data carrier signals carrying such computer programs.

**BACKGROUND**

Modern user devices employ various techniques to authenticate their users. If a user is found not to be authorised, then the device may lock to prevent unauthorised use. However this is not helpful in retrieving lost or stolen user devices, or in apprehending device thieves.

If an authorised user becomes aware their device has been lost or stolen, and can access another device, then services exist for them to use that other device to remotely trigger exfiltration of location data from their device. In this way they may be able to retrieve their device and/or provide information useful to law enforcement in apprehending device thieves. However, thieves who are aware of these services may turn off devices soon after stealing them in order to thwart this approach.

Some services exist in which exfiltration of data from a user device such as location data, photographs and audio recordings, is automatically triggered by user authentication failure. However, such services can waste resources such as power, memory and bandwidth in some circumstances. For example, an authorised user may fail such binary (authenticated/not authenticated) authentication as a result of error, e.g. due to entering a passcode incorrectly. What is needed is a more nuanced approach to data exfiltration from user devices.

**SUMMARY**

According to a first aspect, there is provided a user device comprising:

one or more sensors configured to obtain a plurality of types of sensor data;
a processor configured to:

determine a likelihood that a current user of the user device is an authorised user; and
select a subset of the plurality of types of sensor data, the subset's size being determined in dependence on the determined likelihood;

the user device further comprising:
a transmitter configured to transmit one or more reports, each report comprising one or more of the selected subset of the plurality of types of sensor data.

According to a second aspect, there is provided a computer-implemented method comprising selecting a subset of a plurality of types of sensor data obtained by a user device for the user device to report externally, the subset's size being determined in dependence on a determined likelihood that a current user of a user device is an authorised user.

The computer-implemented method can further comprise determining the likelihood that the current user of the user device is an authorised user.

The computer-implemented method can be performed by a data processing device external to the user device, the computer-implemented method further comprising instructing the user device to transmit one or more reports, each report comprising one or more of the selected subset of the plurality of types of sensor data, that data being current.

The user device can be instructed to transmit the one or more reports to the data processing device performing the method, the method further comprising:
receiving the one or more reports; and
responsive thereto, acting on data comprised in the one or more reports by:

storing data comprised in the one or more reports; and/or
issuing an alert based on the data comprised in the one or more reports; and/or
transmitting instructions to the user device to lock, shut down, or restrict and/or modify its functionality.

The computer-implemented method can be performed by the user device, the computer-implemented method further comprising:

obtaining the plurality of types of sensor data; and
transmitting one or more reports, each report comprising one or more of the selected subset of the plurality of types of sensor data, that data being current.

The computer-implemented method can further comprise:

receiving instructions to lock, shut down, or restrict and/or modify functionality in response to the one or more reports; and
following those instructions.

The computer-implemented method can further comprise, for each of the plurality of types of sensor data, obtaining associated metadata pertaining to one or more of: resource consumption, accuracy, precision, utility, and confidentiality.
Selection of the subset of the plurality of types of sensor data can be performed further in dependence on the obtained metadata;
optionally such that:

where the associated metadata comprises metadata pertaining to resource consumption, selection of types of sensor data associated with relatively low resource consumption is optionally preferred over selection of types of sensor data associated with relatively high resource consumption;
where the associated metadata comprises metadata pertaining to accuracy, selection of types of sensor data associated with relatively high accuracy is optionally preferred over selection of types of sensor data associated with relatively low accuracy;
where the associated metadata comprises metadata pertaining to precision, selection of types of sensor data associated with relatively high precision is optionally preferred over selection of types of sensor data associated with relatively low precision;
where the associated metadata comprises metadata pertaining to utility, selection of types of sensor data associated with relatively high utility is optionally preferred over selection of types of sensor data associated with relatively low utility; and
where the associated metadata comprises metadata pertaining to confidentiality, selection of types of sensor data associated with relatively low confidentiality is optionally preferred over selection of types of sensor data associated with relatively high confidentiality.

Determination of the likelihood can be performed in dependence on obtained data of one or more of the plurality of types of sensor data.
Determination of the likelihood can be performed by biometric authentication.
Determination of the likelihood can be performed by continuous authentication.
The computer-implemented method can further comprise, prior to determination of the likelihood, performing a calibration process for a particular authorised user.
Selection of the one or more types of sensor data can be performed further in dependence on the calibration process;
optionally wherein the determined likelihood on which the selection is based is normalised based on an average likelihood that the current user is the particular authorised user determined during a calibration period when that authorised user was known to be using the user device.
The computer-implemented method can further comprise determining a reporting frequency for each of the selected subset of the plurality of types of sensor data.
Determination of the reporting frequency can be performed in dependence on the determined likelihood;
optionally wherein reporting frequency is determined to be higher the lower the determined likelihood.
Determination of the reporting frequency can be performed in dependence on the obtained metadata associated with the selected subset of the plurality of types of sensor data;
optionally such that:

where the associated metadata comprises metadata pertaining to resource consumption, types of sensor data associated with relatively low resource consumption are optionally reported more frequently than types of sensor data associated with relatively high resource consumption;

where the associated metadata comprises metadata pertaining to accuracy, types of sensor data associated with relatively high accuracy are optionally reported more frequently than types of sensor data associated with relatively low accuracy; where the associated metadata comprises metadata pertaining to precision, types of sensor data associated with relatively high precision are optionally reported more frequently than types of sensor data associated with relatively low precision; where the associated metadata comprises metadata pertaining to utility, types of sensor data associated with relatively high utility are optionally reported more frequently than types of sensor data associated with relatively low utility; and

where the associated metadata comprises metadata pertaining to confidentiality, types of sensor data associated with relatively low confidentiality are optionally reported more frequently than types of sensor data associated with relatively high confidentiality.

Determination of the reporting frequency can be performed in dependence on the calibration process;

optionally such that the reporting frequency is higher the higher the ratio between: an average likelihood the user is the particular authorised user determined during a calibration period when that authorised user was known to be using the user device; and
the determined likelihood that the current user is that authorised user.

The computer-implemented method can further comprise determining a resolution of at least one of the selected subset of the plurality of types of sensor data to be reported.
Determination of the resolution can be performed in dependence on the determined likelihood;
optionally wherein resolution is determined to be higher the lower the determined likelihood.
Determination of the resolution can be performed in dependence on the obtained metadata associated with the at least one of the subset of the plurality of types of sensor data to be reported;
optionally such that:

where the associated metadata comprises metadata pertaining to resource consumption, types of sensor data associated with relatively low resource consumption are optionally reported at higher resolution than types of sensor data associated with relatively high resource consumption;
where the associated metadata comprises metadata pertaining to accuracy, types of sensor data associated with relatively high accuracy are optionally reported at higher resolution than types of sensor data associated with relatively low accuracy;
where the associated metadata comprises metadata pertaining to precision, types of sensor data associated with relatively high precision are optionally reported at higher resolution than types of sensor data associated with relatively low precision;
where the associated metadata comprises metadata pertaining to utility, types of sensor data associated with relatively high utility are optionally reported at higher resolution than types of sensor data associated with relatively low utility; and
where the associated metadata comprises metadata pertaining to confidentiality, types of sensor data associated with relatively low confidentiality are optionally reported at higher resolution than types of sensor data associated with relatively high confidentiality.

Determination of the resolution can be performed in dependence on the calibration process;
optionally such that the resolution is higher the higher the ratio between:

an average likelihood the user is the particular authorised user determined during a calibration period when that authorised user was known to be using the user device; and
the determined likelihood that the current user is that authorised user.

According to a third aspect, there is provided a data processing device configured to perform the method of the second aspect.
According to a fourth aspect, there is provided a computer program comprising instructions which, when the program is executed by a data processing device, cause the data processing device to carry out the method of the second aspect.
According to a fifth aspect, there is provided a computer-readable data carrier having stored thereon the computer program of the fourth aspect.
According to a sixth aspect, there is provided a data carrier signal carrying the computer program of the fourth aspect.

The user device can be a mobile user device.

## BRIEF DESCRIPTION OF THE FIGURES

Aspects of the present disclosure will now be described by way of example with reference to the accompanying figures. In the figures:

Figure 1 schematically illustrates an example system;
Figures 2A, 2B and 2C are flowcharts of example methods; and
Figure 3 schematically illustrates an example data processing device.

## DETAILED DESCRIPTION OF THE FIGURES

Rather than preconfiguring the types of user device sensor data to be exfiltrated in the event that use by an unauthorised user is suspected, it is proposed to automatically determine which types of sensor data to report on-the-fly, dependent on a determined level of confidence that the current user is authorised. In this way, a suitable balance can be struck between the requirement to immediately collate data likely to be useful in locating a device which has been separated from its authorised user and/or apprehending a thief who has stolen it, and the resources required to handle such data.

Finding an appropriate balance between the quantity of data reported and the resources expended in doing so is particularly important where such information gathering is desirable from a mobile user device, e.g. powered by a battery and/or in-built power generator such as a solar panel or dynamo, since the less power expended in reporting the longer the user device will remain powered up, and thus the longer the time window available for data collection.

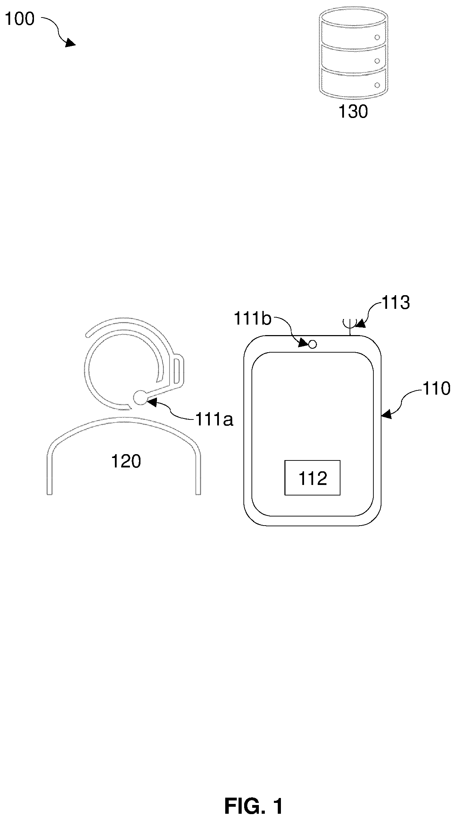

Figure 1 schematically illustrates a system 100 comprising a user device 110. The user device 110 comprises one or more sensors 111 configured to collect a plurality of types of sensor data. Such sensors can be comprised in peripheral devices communicatively coupled to a processor 112 of the user device 110 via wired or wireless connections, such as a microphone 111a of a headset. Alternatively or additionally, such sensors can be comprised in the main body of the user device 110, such as camera 111b, which can for example be communicatively coupled to the processor 112 via an electronic communication bus. Alternatively or additionally, such sensors can be virtual components of the user device 110 (not shown) such as an application programming interface (API) which interacts with software running on the user device 110 and/or hardware of the user device 110 to take device readings such as processor, memory or application usage or settings.

The processor 112 can be configured to determine a likelihood that a current user 120 of the user device 110 is an authorised user, and select one or more of the plurality of types of sensor data in dependence on the determined likelihood. Alternatively, one or both of that determination and selection can be performed by a processor of a data processing device external to the user device 110, such as a server 130.

The user device 110 further comprises a transmitter 113 communicatively coupled to the processor 112 and configured to transmit one or more reports, each report comprising one or more of the selected one or more types of sensor data. The reports are transmitted to the remote server 130, for example operated by law enforcement or a telecommunications service provider, via one or more wired or wireless connections, for example over the internet.

The reports can be transmitted immediately following compilation. Alternatively, they can be stored locally on the user device 110 ready to be transmitted when required. For example, if the authorised user reports their user device 110 lost or stolen (e.g. to law enforcement authorities or a user device tracking service provider such as a telecommunications service provider), then a server (which could be the server 130) could instruct the user device 110 to transmit the one or more reports at that time.

The data reported is current, or up-to-date, data. That is, it can comprise the most recent such data available at the time of reporting or the time of determining the likelihood that the current user is authorised, and/or can comprise only data obtained within a predetermined time period before the time of reporting, or within a predetermined time period of the time the likelihood is determined. The data can optionally be obtained in response to determination of the likelihood to ensure its recency.

On receipt of the one or more reports, the remote server 130 can then act on data comprised in it/them. For example, the remote server 130 can store data comprised in the report(s) for use in any future law enforcement or device recovery operation. It could alternatively or additionally issue an alert based on the report(s), for example to one or more pre-stored contacts of the authorised user (e.g. their own email address or phone number, or those of someone they trust), and/or to law enforcement personnel. The remote server 130 could alternatively or additionally respond to the report(s) with instructions to the user device to lock, shut down or to restrict or modify its functionality.

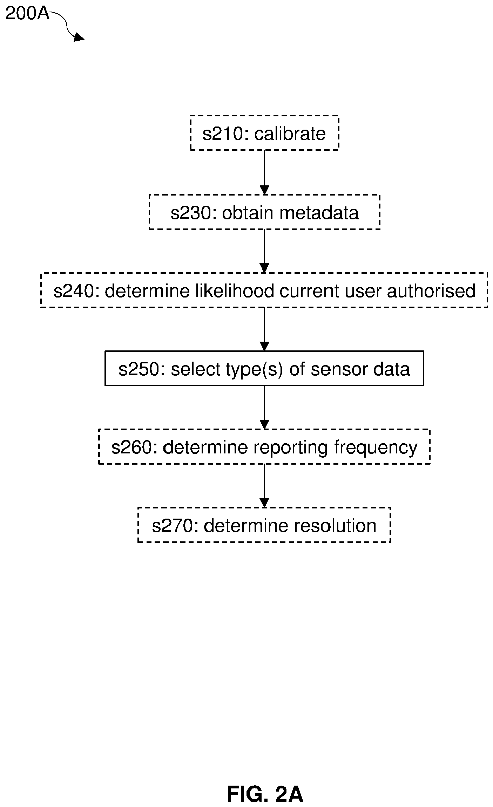

Figure 2A schematically illustrates a computer-implemented method 200A which can be performed by a user device such as the user device 110 of Figure 1 or by another data processing device external to such a user device, such as the server 130 of Figure 1 or another server (not shown). The method 200A comprises, at step s250, selecting a subset of a plurality of types of sensor data obtained by the user device. This selection is made in dependence on a determined likelihood that a current user of the user device is an authorised user. That determination can be made by the data processing device performing the method 200A at step s240, or by another data processing device. The selection as step s250 is to inform compilation of one or more reports for external transmission by the user device, each report comprising one or more of the selected one or more types of sensor data.

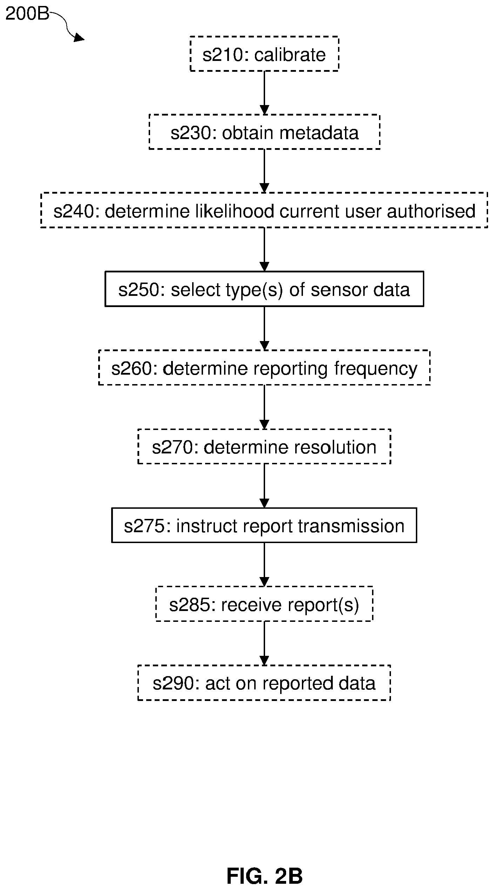

Figure 2B schematically illustrates a computer-implemented method 200B which can be performed by a data processing device, such as the server 130 of Figure 1, external to a user device such as the user device 110 of Figure 1. Steps s240 and s250 are as described above in relation to Figure 2A. In addition, method 200B comprises step s275 of instructing the user device to transmit one or more reports, each report comprising one or more of the selected subset of the plurality of types of sensor data, that data being current. If the user device is instructed to transmit the one or more reports to the data processing device performing the method 200B at step s275 (as opposed to a different data processing device), then the method 200B can further comprise receiving the one or more reports at step s285. In that case, a further step s290 of acting on data comprised in the one or more received reports can be performed. This can for example comprise one or more of:

- storing data comprised in the one or more reports;
- issuing an alert based on the data comprised in the one or more reports; and
- transmitting instructions to the user device to lock, shut down, or restrict and/or modify its functionality.

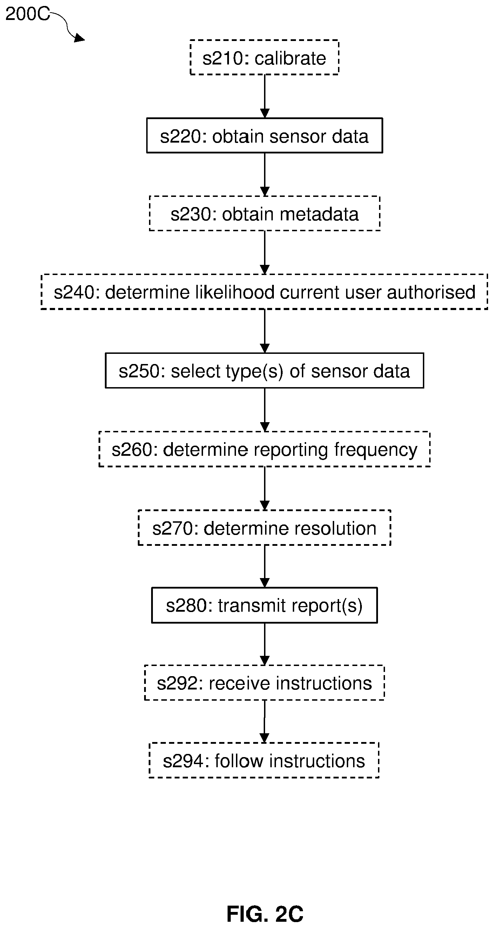

Figure 2C schematically illustrates a computer-implemented method 200C which can be performed by a user device such as the user device 110 of Figure1. Steps s240 and s250 are as described above in relation to Figure 2A. In addition, method 200C comprises step s220 of obtaining a plurality of types of sensor data and step s280 of transmitting one or more reports, each report comprising one or more of the selected subset of the plurality of types of sensor data, that data being current.

The method 200C can further comprise receiving instructions to lock, shut down, or restrict and/or modify functionality in response to the one or more reports at step s292 and subsequently following those instructions at step s294.

The plurality of types of sensor data can be obtained at step s220 by direct collection from a physical sensor built into the user device (such as the camera 111b of the user device 110 of Figure 1), by receipt from a sensor of a peripheral device (such as the microphone 111a of the headset shown in Figure 1), or by collection from a virtual sensor component such as an API interacting with software and/or hardware to take device readings such as processor, memory or application usage or settings.

Sensor data can for example comprise types of sensor data taken from any of the following categories.

- User input data, such as: user-initiated image data or footage (e.g. photographs, video recordings, fingerprint and iris scans), user-initiated tactile inputs (e.g. touch-sensitive display, keyboard and button inputs), user-initiated gesture control inputs, and voice command recordings. The types of sensor data collected can relate to one or both of content (e.g. words typed or vocalised), and ancillary biometrics (e.g. typing speed/rhythm and vocal signature).
- Data collected passively from users, such as: 'selfie' camera images/footage, microphone recordings, handling data (e.g. vibration, accelerometer, gyroscope and pressure sensor measurements), pulse measurements, thermometer measurements, and chemical detections.
- Environmental measurements, such as: location beacon signals received (e.g. from wireless access points, cellular base stations and Global Positioning System (GPS) satellites), light level measurements, camera images/footage, microphone recordings, thermometer measurements, barometer measurements, and chemical detections.
- Telecommunication signals received, such as: near-field communication (NFC), Bluetooth™, Wi-Fi™, and cellular (e.g. 2G, 3G, 4G or 5G) signals. The types of sensor data collected can relate to one or both of content (e.g. communication packet payload), and ancillary data such as signal amplitude, signal-to-noise-ratio (SNR), and directional receiver array signal components.
- Device readings, such as: processor usage, memory usage, application usage, application settings, external (e.g. network or peripheral device) physical connections detected, and telecommunication messages sent.

Different sensors collect different types of sensor data. Some sensors are capable of sensing multiple types of sensor data. For example some cameras can collect both individual still images, and footage comprising a series of image frames collected over a time window. Similarly, some radio receivers can receive signals transmitted according to multiple radio technologies (e.g. Bluetooth™ and Wi-Fi™). As alluded to above, some sensors can collect raw data which can be converted to multiple data types, such as a touch sensitive keyboard display which can output one or more of content data (the strings typed), keystroke time series data and keystroke force data. The types of sensor data reported can comprise one or both of raw data and processed data.

The plurality of types of sensor data can for example comprise two or more of the following:

- camera images;
- camera footage;
- microphone recordings;
- vibration measurements;
- accelerometer measurements;
- gyroscope measurements;
- pressure sensor measurements;
- touch-sensitive display inputs;
- button (e.g. keyboard) inputs;
- fingerprint scans;
- iris scans;
- pulse measurements;
- chemical detections;
- thermometer measurements;
- barometer measurements;
- light level measurements;
- NFC signals received;
- Bluetooth™ signals received;
- Wi-Fi™ signals received;
- 2G cellular signals received;
- 3G cellular signals received;
- 4G cellular signals received;
- 5G cellular signals received;
- GPS signals received;
- network connections detected;
- peripheral device connections detected;
- telecommunication messages sent;
- processor (e.g. central processing unit, CPU) usage data;
- memory usage data;
- application usage data (e.g. applications open); and
- application settings (e.g. volume setting).

Each of the plurality of types of sensor data can be associated with metadata, for example pertaining to one or more of:

- resource consumption (e.g. power and/or memory and/or bandwidth required to collect and/or store and/or transmit that type of sensor data);
- accuracy;
- precision;
- utility (e.g. for continuous authentication, as will be discussed below, and/or for retrieval of a lost device and/or a law enforcement activity); and
- confidentiality (e.g. with respect to security and/or user privacy).

Any of the methods 200A, 200B and 200C can further comprise obtaining such metadata at step s230.

Selection of the one or more of the plurality of types of sensor data at step s250 can be performed further in dependence on such obtained metadata. For example:

- selection of types of sensor data associated with relatively low resource consumption can be preferred over selection of types of sensor data associated with relatively high resource consumption;
- selection of types of sensor data associated with relatively high accuracy can be preferred over selection of types of sensor data associated with relatively low accuracy;
- selection of types of sensor data associated with relatively high precision can be preferred over selection of types of sensor data associated with relatively low precision;
- selection of types of sensor data associated with relatively high utility can be preferred over selection of types of sensor data associated with relatively low utility; and
- selection of types of sensor data associated with relatively low confidentiality can be preferred over selection of types of sensor data associated with relatively high confidentiality.

This can be achieved for example by the metadata comprising a score associated with each of the metadata categories listed above, e.g. with those scores being lower for higher resource consumptions, higher for higher accuracy, higher for higher precision, higher for higher utility and lower for higher confidentiality. Each type of sensor data can then be assigned an overall score as a summation of the scores in its associated metadata, for example as follows.

Table 1

| Type of sensor data | Resource consumption score | Accuracy score | Utility score | Overall score |
| --- | --- | --- | --- | --- |
| Camera | 0.2 | 0.9 | 0.9 | 2.0 |
| Accelerometer | 0.5 | 0.6 | 0.3 | 1.4 |
| GPS | 0.1 | 0.8 | 0.7 | 1.6 |

The likelihood of the current user being an authorised user determined at step s240can be expressed as a percentage confidence level and different confidence percentage bands can correspond to different thresholds for overall sensor data type scores such that only sensor data types having overall scores above a particular threshold are selected when the confidence percentage is within a particular band, for example as follows.

Table 2

| Likelihood current user authorised | % Confidence | Minimum overall score of sensor data types to be selected for reporting | Sensor data type(s) to be reported |
| --- | --- | --- | --- |
| Very high | 90-100% | 2.5 | None |
| High | 80-89% | 2.0 | Camera |
| Medium | 70-79% | 1.5 | Camera, GPS |
| Low | 0-69% | 1.0 | Camera, GPS, Accelerometer |

Determination of the likelihood the current user is authorised at step s240 can itself be performed in dependence on collected data of one or more of the plurality of types of sensor data. For example, a camera image could be used both in a facial recognition process to determine the likelihood that the image shows an authorised user at step s240, and as a likeness of a suspected thief for reporting to law enforcement authorities at step s280. In this way resource consumption associated with the method 200A, 200B or 200C can be made more efficient.

Step s240 can comprise determination of the likelihood the current user is authorised by biometric authentication. Biometrics are measurable, distinctive characteristics of a human which can be used to label and describe individuals. Individuals can therefore be identified using one, or a combination, of their biometrics. Biometrics include physiological characteristics and behavioural characteristics. Biometric measurements on which authentication can be based can for example comprise one or more of:

- facial images;
- pulse measurements;
- gait measurements;
- breathing pattern measurements;
- chemical signature measurements (e.g. from breath and/or perspiration);
- voice recordings;
- handwriting scans;
- handling signature measurements (e.g. one or more of orientation, direction and/or speed and/or acceleration of translational and/or rotational motion, holding pressure, frequency of interaction and/or changes in and/or patterns of changes in one or more of these);
- user interface interaction signature measurements (e.g. characteristic ways of one or more of typing, pressing buttons, interacting with a touch sensitive or gesture control device and viewing a display, for example determined through one or more of: force and pressure on a tactile interface; speed, rhythm, frequency, style and duration of interaction with a tactile or gesture-based interface; and visual tracking of a display);

- linguistic analysis measurements (e.g. from free text type and/or voice recordings); and
- device readings (e.g. processor and/or memory and/ or application usage and/or settings).

In contrast to most traditional knowledge or possession-based authentication techniques (such as recall of a password or presentation of a certificate), biometric authentication does not typically produce a binary (authenticated/not authenticated) result. Instead, a degree of matching to a pre-stored biometric profile is generally determined, for example expressed as a percentage confidence that the current user is an authorised user.

Step s240 can comprise determination of the likelihood the current user is authorised by continuous authentication. Continuous authentication refers to authentication which takes place on an on-going basis. This is in contrast to traditional authentication, which is prompted by a specific external stimulus indicating a request for functionality requiring authentication. (In the traditional case, the request for functionality could be specific, for example requesting access to a protected file, or more general, for example requesting log-in to a device which then enables multiple functions of that device.) Continuous authentication is based on measurements obtained passively, i.e. without the user being required to knowingly perform any particular prompted or remembered action.

Measurements to achieve continuous authentication can be taken by sampling one or more continuous sensor outputs and/or by triggering one or more sensors as required. Measurements can be taken continually; i.e. one after another, as quickly as the measurement apparatus allows. Alternatively, measurements can be taken on a routine basis. For example a measurement or series of measurements could accompany any action or any of a class of actions (as opposed to a specific action) implemented on or by the device, e.g. handling of the device and/or use of any user input device comprised in the device and/or receipt or transmission of a communication by the device. Measurements could alternatively be taken on a particular temporal basis, for example a regular (e.g. periodic) basis, according to some other temporal pattern or randomly triggered (e.g. according to a stochastic variable).

Continuous authentication schemes often (but do not exclusively) comprise biometric authentication. Both biometric and continuous authentication schemes can make use of machine learning techniques such as artificial neural networks (ANNs). In some biometric and/or continuous authentication schemes authentication scores based on multiple authentication factors are fused to produce an overall confidence level, in some cases with different factors being weighted differently (e.g. according to their typical accuracy).

Regardless of the authentication method used, there is generally some variability in confidence levels which are typically achieved for different authorised users. For example, some users mis-type passcodes more often than others and some users have more distinctive biometrics than others. Therefore, according to any of the methods 200A, 200B or 200C, a calibration process can be performed at step s210 to tailor the subsequent method steps to a particular authorised user.

Selection of the one or more types of sensor data at step s250 can be performed further in dependence on any calibration process performed at step s210. For example, the determined likelihood on which the selection is based can be (effectively) normalised based on an average likelihood that the current user is a particular authorised user determined during a calibration period when that authorised user was known to be using the user device. This can be achieved for example by adjusting the likelihood bands in Table 2 according to the authorised user's average authentication score during calibration, as follows.

Table 3

|  |  | Average calibration authentication score band | | |
|---|---|---|---|---|
|  |  | **80-90%** | **90-94%** | **95-100%** |
| **Likelihood current user authorised** | **Very high** | 80-100% | 90-100% | 95-100% |
|  | **High** | 75-79% | 80-89% | 90-94% |
|  | **Medium** | 65-74% | 70-79% | 80-89% |
|  | **Low** | 0-64% | 0-69% | 0-79% |

In Table 3 the middle average calibration authentication score band is representative of what might be expected for confidence scores recorded during calibration for a typical user. The lower average calibration authentication score band is representative of what might be expected for confidence scores recorded during calibration of a user less suited to identification via the authentication method used, e.g. due to higher-than-average behavioural variability. The higher average calibration authentication score band is representative of what might be expected for confidence scores recorded during calibration of a user particularly well suited to identification via the authentication method used, e.g. due to lower than average behavioural variability. For example, if authentication is performed via facial recognition then a user who varies the amount and style of makeup they wear a lot and/or who has a particularly expressive face coupled with high mood variability may have relatively low confidence scores during calibration, while a user who never wears makeup and whose facial expressions do not vary much may have relatively high confidence scores during calibration.

In some implementations, a plurality of reports are transmitted, for example periodically for a predetermined time window or until some trigger condition occurs, such as step s240 being repeated. This can permit tracking of a stolen device over time and provide data useful to law enforcement authorities in establishing and evidencing criminal activities.

Any of the methods 200A, 200B and 200C can further comprise determining a reporting frequency at step s260. Determination of the frequency can for example be performed in dependence on the likelihood that the current user is authorised determined at step s240. For example, reporting frequency can be higher the lower the determined likelihood. In this way a balance can be struck between providing sufficient information to assist retrieval of the user device and/or apprehension of a thief, and the resources expended in reporting.

For similar reasons, if step s230 is implemented then reporting frequency can be determined at step s260 alternatively or additionally in dependence on metadata associated with the selected one or more types of sensor data. For example:

- types of sensor data associated with relatively low resource consumption can be reported more frequently than types of sensor data associated with relatively high resource consumption;
- types of sensor data associated with relatively high accuracy can be reported more frequently than types of sensor data associated with relatively low accuracy;
- types of sensor data associated with relatively high precision can be reported more frequently than types of sensor data associated with relatively low precision;
- types of sensor data associated with relatively high utility can be reported more frequently than types of sensor data associated with relatively low utility; and
- types of sensor data associated with relatively low confidentiality can be reported more frequently than types of sensor data associated with relatively high confidentiality.

If step s210 is implemented then determination of the reporting frequency at step s260 can alternatively or additionally be in dependence on the calibration process, so that differences between users are taken into account in striking an appropriate balance. For example, the reporting frequency could be higher the higher the ratio between (i) an average likelihood the user is a particular authorised user determined during a calibration period when that authorised user was known to be using the user device; and (ii) the determined likelihood that the current user is that authorised user.

If both steps s210 and s230 are performed then the reporting frequency ($f$) for a particular type of sensor data could for example be determined according to Equation 1 below, where c is the average authentication score achieved for the authorised user during calibration (expressed as a percentage), p is the percentage confidence that the current user is the authorised user and s is the overall score for the type of sensor data in question, based on its metadata as discussed above.

$$f \propto s \cdot \frac{c}{p} \qquad\qquad \text{Equation 1}$$

If a plurality of types of sensor data are selected for reporting, each type of sensor data can be reported with a different frequency. In this case each report may comprise only one type of sensor data. Alternatively, reporting periods for types of sensor data to be reported with relatively low frequency can be set as integer multiples of reporting periods for types of sensor data to be reported with relatively high frequency so that some reports comprise more types of sensor data than others. For example, a camera image could be included in every report while GPS data is only included in every other report and accelerometer data only in every third report.

Step s270 can be included in some implementations of any of the methods 200A, 200B and 200C to determine a resolution of at least one of the selected one or more types of sensor data to be included in at least one of the one or more reports. 'Resolution' can for example refer to image resolution of camera images, frame rate of camera footage, sampling rate of time-series sensor data and number of sub-data types included (e.g. typing data may be high resolution in the sense of including both dwell time and flight time between keys, or low resolution in the sense of only including dwell time). Again, this allows an appropriate balance to be struck between reporting sufficient information and reasonable resource expenditure.

As with determination of reporting frequency at step s260, determination of data resolution at step s270 can be performed in dependence on one or more of the likelihood of the current user being authorised determined at step s240, any metadata obtained at step s230, and any calibration performed at step s210. For example, resolution can be higher the lower the determined likelihood.

Alternatively or additionally, if step s230 is implemented then resolution can be determined at step s270 in dependence on metadata associated with the selected one or more types of sensor data. For example:

- types of sensor data associated with relatively low resource consumption can be reported at higher resolution than types of sensor data associated with relatively high resource consumption;
- types of sensor data associated with relatively high accuracy can be reported at higher resolution than types of sensor data associated with relatively low accuracy;
- types of sensor data associated with relatively high precision can be reported at higher resolution than types of sensor data associated with relatively low precision;
- types of sensor data associated with relatively high utility can be reported at higher resolution than types of sensor data associated with relatively low utility; and
- types of sensor data associated with relatively low confidentiality can be reported at higher resolution than types of sensor data associated with relatively high confidentiality.

If step s210 is implemented then determination of the resolution at step s270 can alternatively or additionally be in dependence on the calibration process, so that differences between users are taken into account in striking an appropriate balance. For example, the resolution could be higher the higher the ratio between (i) an average likelihood the user is a particular authorised user determined during a calibration period when that authorised user was known to be using the user device; and (ii) the determined likelihood that the current user is that authorised user.

If both steps 210 and 230 are performed then the reporting resolution (r) for a particular type of sensor data could be determined according to Equation 2 below, where (as in Equation 1 above) c is the average authentication score achieved for the authorised user during calibration (expressed as a percentage), p is the percentage confidence that the current user is the authorised user and s is the overall score for the type of sensor data in question, based on its metadata as discussed above.

$$ r \propto s \cdot \frac{c}{p} \qquad\qquad \text{Equation 2} $$

Any of the methods 200A, 200B and 200C can be performed in response to a trigger, for example unlocking of the user device or actual or attempted access to particular functionality, such as a smart wallet or banking app. Alternatively, any of the methods 200A, 200B and 200C can be repeated on an ongoing basis, for example periodically.

The steps illustrated in Figures 2A, 2B and 2C can be performed directly in response to preceding steps or only subject to certain conditions being met. For example step s240 of determining the likelihood the current user is authorised may repeat on a continuous loop, with steps s250 onwards only being performed if the likelihood determined at step s240 is below a threshold value. This is effectively the case in the example of Tables 1 and 2 above where, when the likelihood the current user is authorised is determined to be very high, none of the types of sensor data available have an overall score high enough to be reported. Alternatively, some low level of reporting may always occur even when the likelihood the current user is authorised is determined to be very high, for example to enable a parent to track their child or a parole officer to confirm that a criminal is complying with the terms of their parole.

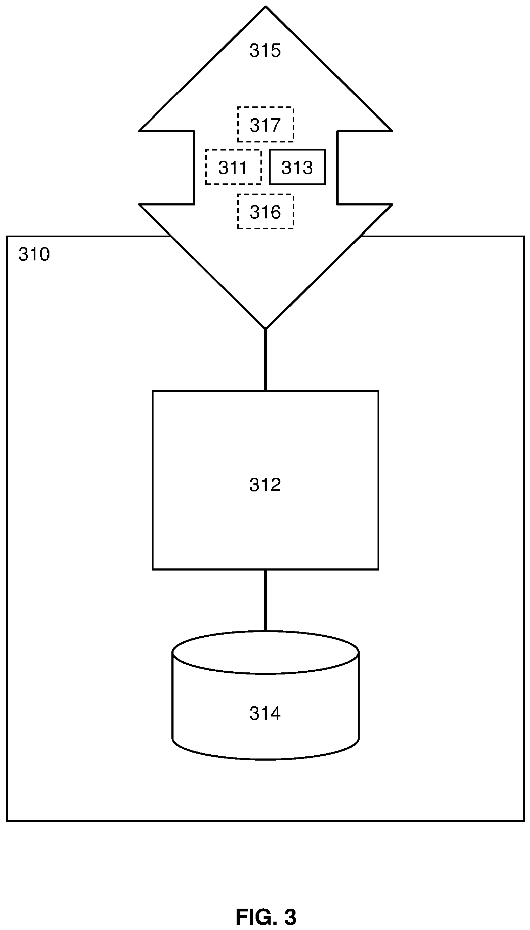

Figure 3 schematically illustrates an example data processing system (DPS) 310 capable of performing any of the methods 200A, 200B or 200C of Figures 2A, 2B or 2C respectively. It comprises a processor 312 operably coupled to both a memory 314 and an interface (I/O) 315.

The memory 314 can optionally comprise computer program instructions which, when the program is executed by the processor 312, cause the data processing system 310 to carry out any of the methods 200A, 200B or 200C. Alternatively or additionally, the interface 315 can optionally comprise one or both of a physical interface 316 configured to receive a data carrier having such instructions stored thereon and a receiver 317 configured to receive a data carrier signal carrying such instructions. The receiver 317, when present, can be configured to receive messages. It can comprise one or more wireless receiver modules and/or one or more wired receiver modules.

The interface 315 comprises a transmitter 313 configured to transmit messages. The transmitter 313 can comprise one or more wireless transmitter modules and/or one or more wired transmitter modules.

The interface 315 can further comprise one or more sensors 311, which can be directly incorporated into the data processing system 310 or comprised in one or more peripheral devices in communication with it.

## INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation, microphones, buttons, keypads, touchscreens, touchpads, trackballs, joysticks, mice, gesture control devices and brain control (e.g. electroencephalography, EEG) devices. User output devices can include, without limitation, speakers, buzzers, display screens, projectors, indicator lights, haptic feedback devices and refreshable braille displays. User interface devices can comprise one or more user input devices, one or more user output devices, or both.

**Claims**

1. A computer-implemented method comprising selecting a subset of a plurality of types of sensor data obtained by a user device for the user device to report externally, the subset's size being determined in dependence on a determined likelihood that a current user of a user device is an authorised user.

2. The computer-implemented method of claim 1, further comprising determining the likelihood that the current user of the user device is an authorised user.

3. The computer-implemented method of either of claims 1 or 2, performed by a data processing device external to the user device, the computer-implemented method further comprising instructing the user device to transmit one or more reports, each report comprising one or more of the selected subset of the plurality of types of sensor data, that data being current.

4. The computer-implemented method of claim 3, wherein the user device is instructed to transmit the one or more reports to the data processing device performing the method, the method further comprising:
   receiving the one or more reports; and
   responsive thereto, acting on data comprised in the one or more reports by:

   storing data comprised in the one or more reports; and/or
   issuing an alert based on the data comprised in the one or more reports; and/or
   transmitting instructions to the user device to lock, shut down, or restrict and/or modify its functionality.

5. The computer-implemented method of either of claims 1 or 2, performed by the user device, the computer-implemented method further comprising:

   obtaining the plurality of types of sensor data; and
   transmitting one or more reports, each report comprising one or more of the selected subset of the plurality of types of sensor data, that data being current.

6. The computer-implemented method of claim 5, further comprising:

   receiving instructions to lock, shut down, or restrict and/or modify functionality in response to the one or more reports; and
   following those instructions.

7. The computer-implemented method of any of claims 1 to 6, further comprising, for each of the plurality of types of sensor data, obtaining associated metadata pertaining to one or more of: resource consumption, accuracy, precision, utility, and confidentiality, wherein selection of the subset of the plurality of types of sensor data is performed further in dependence on the obtained metadata;
   optionally such that:

   where the associated metadata comprises metadata pertaining to resource consumption, selection of types of sensor data associated with relatively low resource consumption is optionally preferred over selection of types of sensor data associated with relatively high resource consumption;
   where the associated metadata comprises metadata pertaining to accuracy, selection of types of sensor data associated with relatively high accuracy is optionally preferred over selection of types of sensor data associated with relatively low accuracy;
   where the associated metadata comprises metadata pertaining to precision, selection of types of sensor data associated with relatively high precision is optionally preferred over selection of types of sensor data associated with relatively low precision;

where the associated metadata comprises metadata pertaining to utility, selection of types of sensor data associated with relatively high utility is optionally preferred over selection of types of sensor data associated with relatively low utility; and

where the associated metadata comprises metadata pertaining to confidentiality, selection of types of sensor data associated with relatively low confidentiality is optionally preferred over selection of types of sensor data associated with relatively high confidentiality.

8. The computer-implemented method of claim 2, or any of claims 3 to 7 as dependent thereon, wherein determination of the likelihood is performed in dependence on obtained data of one or more of the plurality of types of sensor data.

9. The computer-implemented method of any of claims 1 to 8, further comprising, prior to determination of the likelihood, performing a calibration process for a particular authorised user, wherein selection of the one or more types of sensor data is performed further in dependence on the calibration process;

optionally wherein the determined likelihood on which the selection is based is normalised based on an average likelihood that the current user is the particular authorised user determined during a calibration period when that authorised user was known to be using the user device.

10. The computer-implemented method of any of claims 2 to 14, further comprising determining a reporting frequency for each of the selected subset of the plurality of types of sensor data, wherein determination of the reporting frequency is performed in dependence on the determined likelihood;

optionally wherein reporting frequency is determined to be higher the lower the determined likelihood.

11. The computer-implemented method of any of claims 1 to 10, further comprising determining a resolution of at least one of the selected subset of the plurality of types of sensor data to be reported, wherein determination of the resolution is performed in dependence on the determined likelihood;

optionally wherein resolution is determined to be higher the lower the determined likelihood.

12. A data processing device configured to perform the method of any of claims 1 to 11.

13. A computer program comprising instructions which, when the program is executed by a data processing device, cause the data processing device to carry out the method of any of claims 1 to 11.

14. A computer-readable data carrier having stored thereon the computer program of claim 13.

15. A data carrier signal carrying the computer program of claim 13.

**FIG. 1**

200A

s210: calibrate

s230: obtain metadata

s240: determine likelihood current user authorised

s250: select type(s) of sensor data

s260: determine reporting frequency

s270: determine resolution

**FIG. 2A**

200B

s210: calibrate

s230: obtain metadata

s240: determine likelihood current user authorised

s250: select type(s) of sensor data

s260: determine reporting frequency

s270: determine resolution

s275: instruct report transmission

s285: receive report(s)

s290: act on reported data

**FIG. 2B**

200C

s210: calibrate

s220: obtain sensor data

s230: obtain metadata

s240: determine likelihood current user authorised

s250: select type(s) of sensor data

s260: determine reporting frequency

s270: determine resolution

s280: transmit report(s)

s292: receive instructions

s294: follow instructions

**FIG. 2C**

315

317

311   313

316

310

312

314

**FIG. 3**

Europäisches
Patentamt
European
Patent Office
Office européen
des brevets

# EUROPEAN SEARCH REPORT

Application Number

EP 22 19 5071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/164156 A1 (LINDEMANN ROLF [DE]) 30 May 2019 (2019-05-30) * paragraph [0108] – paragraph [0109] * * paragraph [0122] – paragraph [0125] * * paragraph [0131] – paragraph [0138] * * paragraph [0141] – paragraph [0143] * * paragraph [0190] – paragraph [0191] * * paragraph [0209] – paragraph [0210] * * paragraph [0342] – paragraph [0343] * * paragraph [0350] * * paragraph [0353] * * paragraph [0355] – paragraph [0356] * * paragraph [0383] – paragraph [0384] * ----- | 1-15 | INV. G06F21/55 G06F21/88 |
| X | US 2014/137191 A1 (GOLDSMITH MICHAEL ANDREW [CA] ET AL) 15 May 2014 (2014-05-15) * paragraph [0017] – paragraph [0023] * * paragraph [0025] * * paragraph [0033] * * paragraph [0037] – paragraph [0039] * ----- | 1-15 | |
| A | US 2010/216429 A1 (MAHAJAN MANISH [US]) 26 August 2010 (2010-08-26) * paragraph [0001] * * paragraph [0004] – paragraph [0005] * * paragraph [0028] – paragraph [0030] * * paragraph [0035] * * paragraph [0037] * * paragraph [0040] * * paragraph [0052] * ----- | 1-15 | TECHNICAL FIELDS SEARCHED (IPC) G06F |
| A | US 2020/210561 A1 (FU XINYI [CN] ET AL) 2 July 2020 (2020-07-02) * paragraph [0028] * * paragraph [0036] – paragraph [0038] * * paragraph [0052] * * paragraph [0063] – paragraph [0064] * * paragraph [0100] – paragraph [0107] * ----- | 1-15 | |

The present search report has been drawn up for all claims

| Place of search | Date of completion of the search | Examiner |
|---|---|---|
| Munich | 9 February 2023 | Barla Harter, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 5071

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2023

| Patent document cited in search report | | | Publication date | Patent family member(s) | | | Publication date |
|---|---|---|---|---|---|---|---|
| US 2019164156 | A1 | | 30-05-2019 | CN | 111386514 | A | 07-07-2020 |
| | | | | EP | 3717998 | A1 | 07-10-2020 |
| | | | | JP | 2021504860 | A | 15-02-2021 |
| | | | | KR | 20200092368 | A | 03-08-2020 |
| | | | | US | 2019164156 | A1 | 30-05-2019 |
| | | | | WO | 2019104323 | A1 | 31-05-2019 |
| US 2014137191 | A1 | | 15-05-2014 | CA | 2832675 | A1 | 14-05-2014 |
| | | | | EP | 2733635 | A2 | 21-05-2014 |
| | | | | US | 2014137191 | A1 | 15-05-2014 |
| | | | | US | 2016042164 | A1 | 11-02-2016 |
| | | | | US | 2017083692 | A1 | 23-03-2017 |
| | | | | US | 2018247034 | A1 | 30-08-2018 |
| | | | | US | 2020110860 | A1 | 09-04-2020 |
| US 2010216429 | A1 | | 26-08-2010 | US | 2010216429 | A1 | 26-08-2010 |
| | | | | WO | 2010099376 | A2 | 02-09-2010 |
| US 2020210561 | A1 | | 02-07-2020 | CN | 108280332 | A | 13-07-2018 |
| | | | | EP | 3693876 | A1 | 12-08-2020 |
| | | | | SG | 11202004392R | A | 29-06-2020 |
| | | | | TW | 201928741 | A | 16-07-2019 |
| | | | | US | 2020210561 | A1 | 02-07-2020 |
| | | | | WO | 2019114337 | A1 | 20-06-2019 |

EPO FORM P0459

For more details about this annex : see Official Journal of the European Patent Office, No. 12/82